# EUROPÄISCHE PATENTSCHRIFT

(11) **EP 2 100 054 B1**
(45) Veröffentlichungstag und Bekanntmachung des Hinweises auf die Patenterteilung: **29.05.2013**
(21) Anmeldenummer: 07856698.1
(22) Anmeldetag: 13.12.2007
(51) Int. Cl.: F16F 15/22

(54) **VORRICHTUNG ZUR SCHWINGUNGSKONTROLLE EINER KONSTRUKTION**
DEVICE FOR VIBRATION CONTROL OF A STRUCTURE
DISPOSITIF DE CONTRÔLE DES VIBRATIONS D'UNE CONSTRUCTION

(30) Priorität: 15.12.2006 DE 102006059189
(43) Veröffentlichungstag der Anmeldung: 16.09.2009
(73) Patentinhaber: Soletanche Freyssinet, 92500 Rueil Malmaison (FR)
(72) Erfinder: STAROSSEK, Uwe, 21075 Hamburg (DE)
(74) Vertreter: Cabinet Plasseraud
(86) Internationale Anmeldenummer: PCT/EP2007/010953
(87) Internationale Veröffentlichungsnummer: WO 2008/071428

(56) Entgegenhaltungen:
- EP-A- 1 493 941
- DE-A1- 10 130 643
- FR-A- 2 845 744
- FR-A- 2 852 648
- JP-A- 60 237 239

## Beschreibung

Baukonstruktionen, Land-, Wasser-, Luft- und Raumfahrzeuge sowie sonstige Maschinen, Geräte und Anlagen, im folgenden allgemein als Konstruktionen bezeichnet, werden durch dynamisch einwirkende Kräfte zu Schwingungen angeregt, die die Gebrauchsfähigkeit, die Dauerhaftigkeit und die Stand- oder Betriebssicherheit beeinträchtigen können. Die Möglichkeit und die Auswirkungen derartiger Schwingungen sind beim Konstruktionsentwurf zu untersuchen. Die Schwingungen sind erforderlichenfalls durch geeignete Maßnahmen zu unterdrücken oder zu begrenzen. Eine mögliche Maßnahme ist die Versteifung der Konstruktion, was allerdings einen erhöhten Materialbedarf, höheres Gewicht und höhere Kosten bedingt.

Eine sinnvolle und wirtschaftliche Alternative können passive oder aktive Kontrollsysteme sein, die zusätzliche, den Schwingungen entgegenwirkende Kräfte in die Konstruktion einleiten und deren Schwingungsbeeinträchtigung damit reduzieren. Im Falle der sogenannten aktiven mechanischen Dämpfer werden diese zusätzlichen Kräfte meist durch die Verschiebung oder Beschleunigung von Hilfsmassen erzeugt. Bei diesem gezielten Regeleingriff sind Verschiebung oder Beschleunigung der Hilfsmasse Stellgrößen, die in Abhängigkeit der Systemparameter und der gemessenen Bewegung der Konstruktion und eventuell der gemessenen Umgebungsbedingungen zu berechnen und einzustellen sind (Regelkreis). Derartige Systeme kommen bei Hochhäusern in Erdbebengebieten bereits zum Einsatz (siehe Housner, G. W.; Bergmann, L. A.; Caughey, T. K.; Chassiakos, A. G.; Claus, R. O.; Masri, S. F.; Skelton, R. E.; Soong, T. T.; Spencer, B. F.; Yao, J. T. P. "Structural Control: Past, Present, and Future." Journal of Engineering Mechanics, 9 (123), 1997, 897-971).

Die Anforderungen an Vorrichtungen zur Schwingungskontrolle sind vielfältig und in den Entwurfskonsequenzen teilweise gegenläufig. Einerseits sollen die vom Kontrollsystem erzeugten Kraftgrößen möglichst beliebig zeitlich und räumlich einstellbar sein. Andererseits sollte das Konstruktionsprinzip im Interesse hoher Betriebssicherheit und geringer Erstellungskosten ein möglichst einfaches sein. Weitere Kriterien sind hohe Robustheit des Regelkreises und ein möglichst geringer Energiebedarf.

Aus WO 2005/116340 A1 ist eine Vorrichtung zur Dämpfung einer Flatterbewegung bei einem Tragwerk bekannt, die ein Paar schwenkbar gelagerter Massenkörper aufweist, die auf gegenüberliegenden Seiten einer Achse angeordnet sind. Ein Antrieb verstellt die Massenkörper um einen vorbestimmten Winkel in einer Ebene senkrecht zu der Achse nach Maßgabe einer Steuereinheit, die auf gemessene Werte der Tragwerksposition und/oder -bewegung reagiert. Die Schwenkbewegung ist dabei auf einen bestimmten Winkelbereich beschränkt.

Aus WO 2006/029851 ist eine Dämpfervorrichtung zur Dämpfung einer Schwingungsbewegung bekannt, bei der ein Paar von Massenkörpern an den beiden Enden eines drehbar gelagerten Balkens befestigt und auf gegenüberliegenden Seiten einer Dreh- oder Schwingungsachse des Balkens angeordnet ist, wobei die Dreh- oder Schwingungsbewegung des Balkens aktiv von einem Aktuator oder passiv mittels Feder- und/oder Dämpferelementen vorgegeben oder beeinflußt werden kann. Die relative

Anordnung beider Massenkörper ist dabei durch den Balken fest vorgegeben.

Aus Patent Abstracts of Japan 06147258 A ist eine Vorrichtung zur Vibrationsdämpfung bekannt. Die Vorrichtung besteht aus einem Getrieberad mit einer innen liegenden Zahnung, in der ein zweites Zahnrad mit einer aussen liegenden Zahnung kämmt. Das zweite Zahnrad besitzt den halben Durchmesser des äusseren Getrieberads und ist im Randbereich mit einem Gewicht versehen. Über einen zentral angeordneten Hebelarm wird das zweite Zahnrad in einer Rotationsbewegung innerhalb des äusseren Getrieberades versetzt.

Aus Patent Abstracts of Japan 2000120764 A ist eine Vorrichtung zur Vibrationsdämpfung bekannt, bei der zwei gegeneinander drehbare Scheiben mit exzentrisch angeordneten kleineren Scheiben versehen sind. Die kleineren Scheiben tragen exzentrisch ein Gewicht. Durch Einstellung der Winkelposition der kleineren Scheiben bezogen auf die grössere Scheibe kann der Abstand des Gewichts von der Rotationsachse eingestellt werden.

Aus Patent Abstracts of Japan 02096064 A ist eine Vorrichtung zur Vibrationssteuerung bei hohen Gebäuden bekannt. Die Vorrichtung besitzt zwei Massen, die jeweils über einen Arm rotierbar in der Vorrichtung gelagert sind. Es ist vorgesehen, die Länge des Rotationsarms zu steuern, während sich die Massenkörper gegensinnig zueinander drehen.

FR2845744 A betrifft eine Vorrichtung und ein Verfahren zur Reduzierung von Schwingungen, die von einem Kraftfahrzeug-Chassis übertragen werden, und zeigt Vorrichtung zur Schwingungskontrolle einer Konstruktion mit
- zwei Massenkörpern, die drehbar um jeweils eine Rotationsachse gelagert sind, wobei sich beide Rotationsachsen in der gleichen Richtung erstrecken und der Schwerpunkt jedes Massenkörpers einen Radius von der zugeordneten Rotationsachse aufweist,
- einem Antrieb, der jeden Massenkörper in eine umlaufende Rotationsbewegung versetzt,
- mindestens einem Sensor, der eine Bewegung oder Beschleunigung der Konstruktion erfasst, und
- einer Steuerung, die auf Grundlage der erfassten Bewegung oder Beschleunigung die folgende Stellgröße der beiden Massenkörpern zum Erzeugen von resultierenden Kraftgrößen, um die Schwingung einer mit der Vorrichtung verbundenen Konstruktion zu kontrollieren, steuert, :
- den Drehwinkel der Rotationsbewegung mindestens eines Massenkörpers.

Aufgabe der Erfindung ist es, eine Vorrichtung zur Schwingungskontrolle einer Konstruktion zur Verfügung zu stellen, bei der die bestehenden Anforderungen besser als durch bekannte Vorrichtungen und in ausgewogener Weise erfüllt werden.

Diese Aufgabe wird gelöst durch eine Vorrichtung zur Schwingungskontrolle einer Konstruktion mit den Merkmalen des Anspruchs 1. Vorteilhafte Ausgestaltungen sind Gegenstand der Unteransprüche.

Die erfindungsgemäße Vorrichtung zur Schwingungskontrolle einer Konstruktion wird mit den Merkmalen des Anspruchs 1 definiert.

Für die erfindungsgemäße Vorrichtung wird hier die Bezeichnung Doppelunwuchtrotor geprägt und verwendet.

Jeder Massenkörper bildet durch den Abstand seines Schwerpunkts von der zugeordneten Rotationsachse eine Unwucht. Beide Rotationsachsen erstrecken sich in der gleichen Richtung, d.h. sie verlaufen parallel. Sie können einen Abstand voneinander aufweisen oder ohne Abstand voneinander, d.h. zusammenfallend, angeordnet sein. Der Drehsinn jedes Massenkörpers ist zunächst beliebig. Beide Massenkörper führen eine umlaufende Rotationsbewegung aus. Jeder eine Unwucht bildende Massenkörper erzeugt dabei aufgrund der Zentripetalkräfte eine zeitlich veränderliche Kraft auf seine Rotationsachse.

Die durch die beiden umlaufenden Massenkörper erzeugten resultierenden Kraftgrößen, die von der Vorrichtung zur Schwingungskontrolle ausgeübt werden, sind dabei von der Ausgestaltung der Vorrichtung abhängig. Insbesondere haben die Größen der beiden Massen, die Rotationsgeschwindigkeiten der beiden Massenkörper, eine Phasenbeziehung zwischen den beiden Rotationsbewegungen (bei betragsmäßig gleicher Geschwindigkeit) sowie der Abstand der Rotationsachse eines Massenkörpers von der Rotationsachse des anderen Massenkörpers einen maßgeblichen Einfluß. Die genannten Einflußgrößen können dabei grundsätzlich fest vorgegeben oder variabel sein. Durch die erfindungsgemäß vorgesehene Steuerung mindestens einer der maßgeblichen Größen nach dem Wortlaut des Anspruchs 1 wird eine gezielte Beeinflussung der resultierenden Kraftgrößen erreicht, um die Schwingung einer mit der Vorrichtung verbundenen Konstruktion zu kontrollieren, d.h. insbesondere zu dämpfen. Durch eine geeignete Steuerung kann sowohl ein in Richtung der Rotationsachsen wirkendes Drehmoment (d.h. ein Drehmoment um die Achsenrichtung herum) als auch eine senkrecht zur Richtung der Rotationsachsen wirkende Kraft erzeugt werden. Der Zeitverlauf der Moment- und Kraftwirkungen ist von den genannten Einflußgrößen abhängig und kann durch die Ausgestaltung der Vorrichtung und die erfindungsgemäße Steuerung auf vielfältige Weise vorgegeben werden. Durch die umlaufende Rotationsbewegung der beiden Massenkörper können bei konstanter Rotationsgeschwindigkeit periodische Kräfte und Drehmomente erzeugt werden, wobei der Antrieb lediglich die Rotationsbewegung der beiden Massenkörper aufrechterhalten muß. Die Vorrichtung ist daher besonders energiesparend. Bei nicht-konstanter Rotationsgeschwindigkeit können auch nicht-periodische Moment- und Kraftwirkungen erzielt werden.

In einer bevorzugten Ausgestaltung der Erfindung ist ein Sensor vorhanden, der eine Umgebungsbedingung erfaßt. Dabei kann es sich beispielsweise um eine Windgeschwindigkeit oder eine Beschleunigung des Bodens, etwa bei einem Erdbeben, handeln. Es können auch mehrere Sensoren verwendet werden, die gegebenenfalls unterschiedliche Umgebungsbedingungen erfassen. Eine Berücksichtigung derartiger Umgebungsbedingungen durch die Steuerung der Vorrichtung kann zu einem effektiven Einsatz der Vorrichtung beitragen. Beispielsweise kann die Vorrichtung erst oberhalb einer bestimmten Windgeschwindigkeit in Betrieb genommen werden.

In einer bevorzugten Ausgestaltung der Erfindung sind die Rotationsgeschwindigkeiten der beiden Massenkörper dem Betrag nach gleich groß. Dadurch kann die Vorrichtung mit einer festen Phasenbeziehung zwischen den beiden rotierenden Massenkörpern betrieben werden. Es wird eine harmonische Kraft- bzw. Momentwirkung mit der gemeinsamen Rotationsgeschwindigkeit der beiden Massenkörper erreicht.

In einer weiteren bevorzugten Ausgestaltung der Erfindung haben die beiden Massenkörper die gleiche Masse. Bei geeigneter Anordnung der beiden Massenkörper ergibt sich dadurch auf besonders einfache Weise eine gleich große Unwucht beider rotierender Massenkörper. Insbesondere können bei entsprechender Steuerung einzelne Komponenten der Kraftwirkung eines Massenkörpers durch entsprechende Komponenten der Kraftwirkung des anderen Massenkörpers kompensiert werden, so daß ein Betrieb der Vorrichtung auch ohne resultierende Kräfte, Kraftkomponenten und/oder Drehmomente auf einfache Weise möglich ist.

In einer weiteren bevorzugten Ausgestaltung der Erfindung ist der Abstand eines Massenkörpers von der dem Massenkörper zugeordneten Rotationsachse für beide Massenkörper gleich groß. Der Radius der Massenkörper von ihren jeweiligen Rotationsachsen kann dabei fest vorgegeben oder variabel sein. In Kombination mit Massenkörper gleicher Masse wird durch den gleichen Radius der beiden Massenkörper von den zugeordneten Rotationsachsen eine gleich große Unwucht jedes Massenkörpers erzielt.

Gemäß der Erfindung ist der Abstand zwischen den den beiden Massenkörpern zugeordneten Rotationsachsen einstellbar. Durch Verstellen des Abstands zwischen den beiden Rotationsachsen kann die Amplitude eines erzeugten Drehmoments eingestellt werden. Dabei ist die Verstellbarkeit des Drehmoments unabhängig von einer gegebenenfalls zusätzlich erzeugten Kraft.

In einer weiteren bevorzugten Ausgestaltung der Erfindung besteht mindestens einer der beiden Massenkörper aus zwei Teilmassenkörpern, die in Richtung der Rotationsachsen voneinander beabstandet sind. Die beiden einen Massenkörper bildenden Teilmassenkörper können bevorzugt gleich groß und stets gleichlaufend sein. Insbesondere kann der nicht geteilte Massenkörper zwischen den beiden umlaufenden Teilmassenkörpern auf einer gemeinsamen Rotationsachse angeordnet werden, so daß unerwünschte Momente um eine senkrecht zu dieser gemeinsamen Rotationsachse stehenden Achse nicht auftreten.

In einer weiteren bevorzugten Ausgestaltung der Erfindung sind die Phasenbeziehungen zwischen den Rotationsbewegungen beider Massenkörper durch eine mechanische Kopplung einstellbar. Dadurch wird die Steuerung der Phasenbeziehungen zwischen den beiden Massenkörpern vereinfacht. Insbesondere kann ein Getriebe verwendet werden, über das die Phasendifferenz zwischen den beiden umlaufenden Massenkörpern vorgegeben werden kann.

Gemäß einer weiteren bevorzugten Ausgestaltung der Erfindung sind die Rotationsbewegungen beider Massenkörper gegensinnig. Bei gegensinniger Rotation beider Massenkörper läßt sich durch diejenigen Punkte des Bewegungsablaufs, in denen die Winkellage beider Massenkörper übereinstimmt, eine Richtung definieren, entlang der eine harmonische Kraft wirkt. Durch Vorgeben der Phasenbeziehung zwischen den beiden Rotationsbewegungen kann diese Richtung bestimmt werden.

Gemäß einer weiteren bevorzugten Ausgestaltung der Erfindung fallen die Rotationsachsen beider Massenkörper zusammen. In diesem Fall treten keine Drehmomente auf. Es wird somit lediglich eine Kraftwirkung erzielt.

In einer weiteren bevorzugten Ausgestaltung der Erfindung sind die Rotationsbewegungen beider Massenkörper gleichsinnig. Bevorzugt beträgt der Phasenwinkel zwischen den beiden Rotationsbewegungen stets 180°, d.h. die beiden Massenkörper sind stets in Gegenlage. Auf diese Weise läßt sich ein Moment in Richtung der Rotorachsen erzeugen, ohne daß eine gleichzeitige Kraftwirkung auftritt.

In einer weiteren bevorzugten Ausgestaltung der Erfindung ist die Vorrichtung mit einer zweiten Vorrichtung kombiniert, wobei sich die Rotationsachsen der ersten und der zweiten Vorrichtung in die gleiche Richtung erstrecken. Alle vier Rotationsachsen verlaufen somit parallel. Die Rotationsachsen können dabei einen Abstand voneinander aufweisen oder auch zusammenfallen. Durch die Kombination zweier Vorrichtungen ergeben sich vielfältige Möglichkeiten, gleichzeitig eine Kraft und ein Moment in Richtung der Rotorachsen zu erzeugen. Je nach Ausgestaltung der einzelnen Vorrichtungen lassen sich die Frequenzen, Amplituden und Richtungen von Kraft und Moment besonders einfach einstellen. Dadurch kann die Konstruktion der einzelnen Vorrichtungen vereinfacht und/oder der erforderliche Steuerungsaufwand reduziert werden.

Gemäß einer weiteren bevorzugten Ausgestaltung der Erfindung sind die Rotationsgeschwindigkeiten der beiden Massenkörper der ersten Vorrichtung und der beiden Massenkörper der zweiten Vorrichtung betragsmäßig gleich. Kraft- und Momentwirkungen beider Vorrichtungen addieren sich dann stets zu harmonischen Kraft- und Momentwirkungen gleicher Frequenz.

In einer weiteren bevorzugten Ausgestaltung der Erfindung weisen die beiden Vorrichtungen einen Abstand voneinander auf. Bevorzugt ist dieser Abstand zwischen den beiden Vorrichtungen einstellbar. Über diesen Abstand kann die Amplitude eines von den beiden Vorrichtungen gemeinsam erzeugten Moments eingestellt werden.

In einer weiteren bevorzugten Ausgestaltung der Erfindung fallen die Rotationsachsen der Massenkörper beider Vorrichtungen zusammen. Anders ausgedrückt, beträgt der Abstand zwischen den beiden Vorrichtungen null. Es sind also alle vier Rotationsachsen auf einer Geraden angeordnet. Dies ermöglicht eine besonders kompakte Bauweise sowie das Erzeugen harmonischer Kräfte beliebiger Amplitude und in beliebiger Richtung senkrecht zur Rotorachse. Dabei sind Amplitude und Richtung der Kraft durch Vorgabe der Phasenwinkel der beiden einzelnen Vorrichtungen besonders einfach einstellbar.

In weiteren bevorzugten Ausgestaltungen der Erfindung sind zwei jeweils aus zwei Vorrichtungen bestehende Vorrichtungen auf vorteilhafte Weise miteinander kombiniert.

Gemäß einer weiteren bevorzugten Ausgestaltung ist die Steuerung, die aufgrund der Meßwerte des mindestens einen Sensors die Stellgrößen ermittelt und Steuerbefehle für die Steuerung erzeugt, um die Bewegungen oder Beschleunigungen der Konstruktion zu kontrollieren, als Regelung ausgelegt. Das heißt, die Steuerbefehle werden entsprechend der zeitlichen

Änderung der Meßwerte und hinsichtlich des Regelungsziels der Unterdrückung oder Begrenzung von Schwingungen fortwährend angepaßt. Mit einer derartigen Regelung kann ein Regelkreis gebildet werden, der unerwünschte Bewegungen oder Schwingungen der Konstruktion besonders wirksam dämpft.

In einer weiteren bevorzugten Ausgestaltung der Erfindung ist eine Vielzahl von Vorrichtungen über die Konstruktion verteilt angeordnet. Insbesondere bei großen Konstruktionen, wie z.B. einer Brücke, kann dadurch eine wirksame Schwingungskontrolle erreicht werden. Bevorzugt erfolgt die Steuerung oder Regelung der einzelnen Vorrichtungen koordiniert. Es ist jedoch auch möglich und kann vorteilhaft sein, die Vorrichtungen autonom, d.h. unabhängig voneinander zu steuern bzw. zu regeln.

Zusätzlich kann vorgesehen sein, den Abstand von mindestens einem Massenkörper zu seiner zugeordneten Rotationsachse als veränderlich und während des Betriebs steuerbar vorzusehen und diesen Abstand durch eine Steuerung auf Grundlage der erfaßten Bewegung oder Beschleunigung zu steuern.

Die Erfindung wird nachfolgend anhand von in sieben Figuren dargestellten Ausführungsbeispielen näher erläutert. Es zeigen:
- Fig. 1: eine schematische Darstellung eines Doppelunwuchtrotors nach der Erfindung (Grundprinzip);
- Fig. 2: eine schematische Darstellung eines weiteren Ausführungsbeispiels der Erfindung mit gegensinnig umlaufenden Massenkörpern (Variante 1a);
- Fig. 3: eine schematische Darstellung eines nicht erfindungsgemäßen Beispiels mit gegensinnig umlaufenden Massenkörpern und zusammenfallenden Rotationsachsen (Variante 1b);
- Fig. 4: eine schematische Darstellung eines weiteren nicht erfindungsgemäßen Beispiels mit einem von zwei Teilmassenkörpern gebildeten Massenkörper (Variante 1c);
- Fig. 5: eine schematische Darstellung eines weiteren Ausführungsbeispiels der Erfindung mit gleichsinnig umlaufenden Massenkörpern (Variante 2a);
- Fig. 6: eine schematische Darstellung eines weiteren Ausführungsbeispiels der Erfindung mit zwei kombinierten Doppelunwuchtrotoren (Variante 3);
- Fig. 7: eine schematische Darstellung eines weiteren nicht erfindungsgemäßen Beispiels mit zwei kombinierten Doppelunwuchtrotoren und zusammenfallenden Rotationsachsen, wobei drei der vier Unwuchtmassen durch jeweils zwei gleichgroße Teilmassen ersetzt sind (Variante 4c).

Die beiden Massenkörper eines Doppelunwuchtrotors werden jeweils von einer Unwuchtmasse gebildet. Eine Unwuchtmasse mit zugeordneter Rotationsachse wird als Rotor bezeichnet. Der Doppelunwuchtrotor und seine Ausgestaltungen werden im Hinblick auf ihre Wirksamkeit und deshalb unter Beschränkung auf die zugrunde liegenden mechanischen Prinzipien und unter Zuhilfenahme mechanischer Prinzipskizzen beschrieben. Die Möglichkeiten der technischen Realisierung sind mannigfaltig und hier nicht im einzelnen betrachtet.

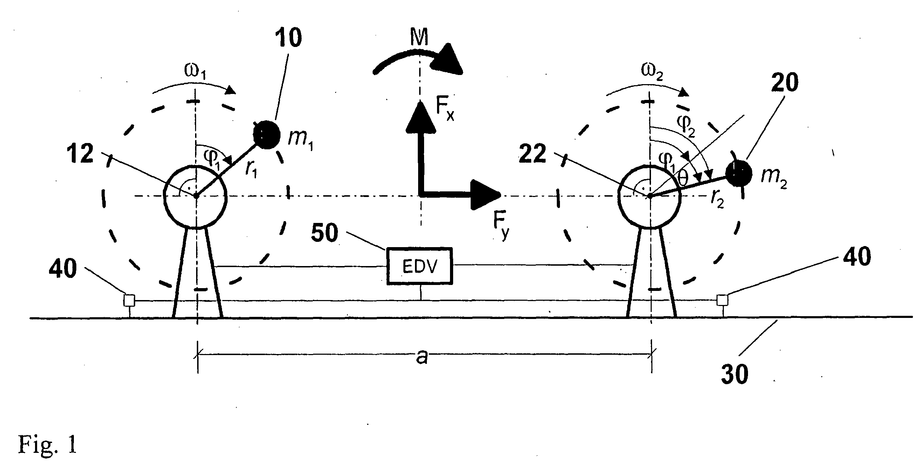

Der Doppelunwuchtrotor besteht aus zwei gleichartig ausgelegten Rotoren mit rotierenden Unwuchtmassen 10 (m₁) bzw. 20 (m₂) (Fig. 1). Die Achsen 12, 22 der beiden Rotoren sind parallel und in einem Abstand a zueinander angeordnet. Die Unwuchtmassen 10, 20 rotieren mit den Drehgeschwindigkeiten ω₁ bzw. ω₂. Im Rahmen eines Regelkreises können die Drehgeschwindigkeiten ω₁, ω₂, die Phasenbeziehung θ zwischen den Drehwinkeln der beiden Unwuchtmassen 10, 20, der Abstand a der beiden Rotorachsen und auch die Radien r₁ bzw. r₂ der beiden Unwuchtmassen 10, 20, und die Größe der beiden Unwuchten als Regelgröße veränderlich sein. Ein weiterer wählbarer oder durch eine Regelung einstellbarer Parameter im Sinne einer Regelgröße ist der Drehsinn der beiden Rotoren, wobei gleichsinnige oder gegensinnige Rotation möglich ist. Die Regelgrößen werden auf Grundlage von Messungen der Bewegung der Konstruktion 30 und gegebenenfalls der Umgebungsbedingungen im Rahmen eines Regelkreises berechnet und durch Servomotoren, hydraulische Stellvorrichtungen oder andere Arten von Aktuatoren eingestellt. Die Koordinierung der an den beiden Rotoren einzustellenden Regelgrößen kann teilweise durch mechanische Hilfsvorrichtungen erfolgen. In speziellen Ausgestaltungen können einzelne Regelgrößen als konstant vorgegeben werden oder in fester vorgegebener Beziehung zueinander stehen. Insbesondere können die beiden Drehgeschwindigkeit betragsmäßig gleich groß sein, so daß gilt |ω₁| = |ω₂| = ω. Der Doppelunwuchtrotor ist mit der Konstruktion 30 fest verbunden. Zur Verstärkung der Wirksamkeit oder zur Erzielung besonderer Wirkungen können auch mehrere Vorrichtungen in gleichen oder unterschiedlichen Ausgestaltungen zum Einsatz kommen, deren Betrieb koordiniert oder autonom erfolgt.

Mittels der beschriebenen Vorrichtung in einfacher oder mehrfacher Ausführung lassen sich harmonische oder nichtharmonische Kraftgrößen weitgehend beliebiger Richtung, Frequenz und Amplitude erzeugen und in die Konstruktion 30 einleiten. Bei der Vorrichtung in einfacher Ausführung handelt es sich bei diesen Kraftgrößen um zwei senkrecht aufeinanderstehende Kräfte Fₓ, Fy in der Ebene senkrecht zu den Rotorachsen 12, 22 und ein Moment M in Richtung der (d.h. um die) Rotorachsen 12, 22. Durch entsprechende Wahl der im Vorabsatz aufgeführten Regelgrößen lassen sich diese drei Kraftgrößen isoliert oder gleichzeitig erzeugen. Bei gleichzeitiger Erzeugung ist das Amplituden- bzw. Größenverhältnis der beteiligten Kraftgrößen über weite Bereiche einstellbar. Harmonische Kraftgrößen der Frequenz ω/2π werden erzeugt bei konstanter Drehgeschwindigkeit ω.

Im folgenden werden die in der Figur 1 verzeichneten Symbole verwendet, die die folgende Bedeutung haben: ϕ₁ ist der Drehwinkel der Rotationsbewegung des ersten Massenkörpers bezogen auf eine Referenzwinkellage (in Fig. 1 die Richtung senkrecht zur Verbindungslinie der beiden Rotationsachsen 12, 22); ϕ₂ ist der Drehwinkel der Rotationsbewegung des zweiten Massenkörpers bezogen auf dieselbe Referenzwinkellage; die Beziehung zwischen den beiden Drehwinkeln wird gegebenenfalls durch das Maß θ, hier genannt Phasenwinkel, beschrieben; ω₁ und ω₂ bezeichnen die Winkelgeschwindigkeiten der beiden Rotationsbewegungen. Bei Vorliegen betragsgleicher und zeitlich konstanter Winkelgeschwindigkeiten ω = |ω₁| = |ω₂| gelten die folgenden Beziehungen: ϕ₁ = ωt; ϕ₂ = ωt + θ bei gleichsinniger Rotation, bzw. ϕ₁ = ωt; ϕ₂ = - ωt + θ bei gegensinniger Rotation. Bei gleichsinniger Rotation gilt ϕ₂ - ϕ₁ = θ, womit θ auch in herkömmlicher Bezeichnungsweise einen Phasenwinkel darstellt. Bei gegensinniger Rotation gilt ϕ₂ - ϕ₁ = - 2ωt + θ, womit die hier gewählte Bezeichnung von θ als Phasenwinkel von der herkömmlichen Bezeichnungsweise abweicht.

Die in die Konstruktion 30 eingeleiteten Kraftgrößen dienen der Schwingungskontrolle und sind im Rahmen eines Regelkreises zu ermittelnde Regelgrößen. Im Interesse höherer Regelungseffizienz können nichtharmonische aber periodische oder auch aperiodische Kraftgrößenverläufe wünschenswert sein. Diese lassen sich durch veränderliche Drehgeschwindigkeit ω (t) erzeugen. Ein näherungsweise sägezahnförmiger Kraftgrößenverlauf läßt sich erzeugen durch eine konstante Drehgeschwindigkeit ω, der ein harmonischer Term Δω sin ωt überlagert wird. Die nachfolgenden Ausführungen beziehen sich - im Interesse einfacherer Darstellung - auf den Betrieb mit konstanter Drehgeschwindigkeit, wobei aber jeweils auch der Betrieb mit veränderlicher Drehgeschwindigkeit möglich und Gegenstand der Erfindung ist.

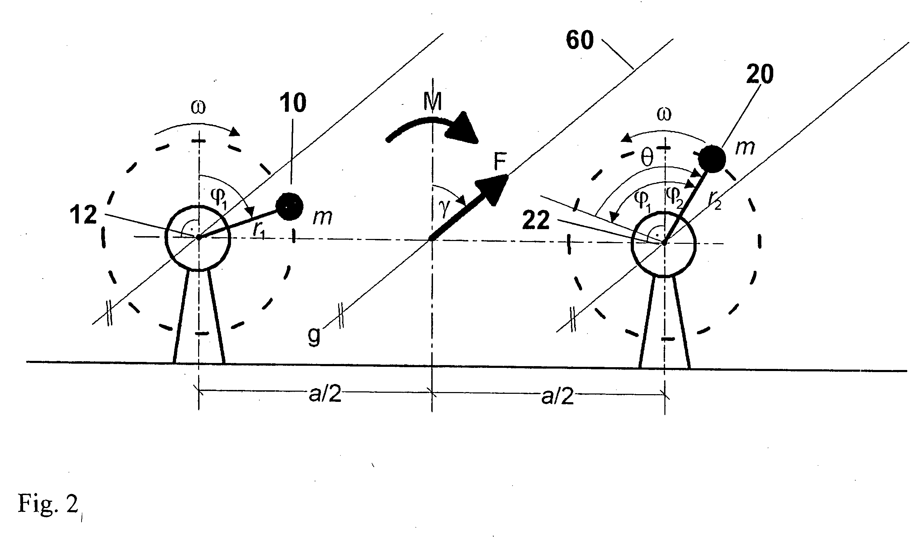

In dem in Fig. 2 dargestellten Beispiel (Variante 1a) der im vorstehenden beschriebenen Vorrichtung in einfacher Ausführung sind beide Unwuchtmassen 10, 20 gleich groß (m₁ = m₂ = m) und rotieren gegensinnig. Die Bewegung wird durch die Ausdrücke ϕ₁ = ωt; ϕ₂ = - ωt + θ beschrieben. (Auf eine Darstellung der in Fig. 1 gezeigten Elemente des Regelkreises wie Sensor 40 und EDV 50 wird in den Fign. 2 bis 7 verzichtet; diese Elemente sind gleichwohl vorhanden.) Die beiden Begegnungspunkte der Unwuchtmassen 10, 20 - das sind die beiden Lagen der Massen, in denen die Winkelstellungen der Rotoren übereinstimmen - liegen auf einer Geraden 60 (g), die in einem gewissen Winkel γ = θ/2 zur Senkrechten auf die Verbindungslinie der beiden Rotorachsen 12, 22 liegt. Dieser Winkel ist somit über den Phasenwinkel θ einstellbar. Auf diese Weise läßt sich eine harmonische Kraft F in Richtung von g und ein harmonisches Moment M in Richtung der Rotorachsen 12, 22 erzeugen. Die Amplituden der Kraftgrößen lassen sich, unter Beibehaltung der Frequenz, durch Verändern der Radien r₁, r₂ einstellen, wobei die erleichternde Vorgabe r₁ = r₂ in der Regel möglich ist. Wird γ so eingestellt, daß g senkrecht zur Verbindungslinie der beiden Rotorachsen 12, 22 liegt (γ = 0), entsteht, falls r₁ = r₂, ausschließlich eine harmonische Kraft F in Richtung von g. Die Größe des Abstands a der beiden Rotorachsen 12, 22 ist dabei ohne Einfluß, so daß - im Interesse möglichst kompakter Bauweise - dieser Abstand auf Null reduziert werden kann, d.h. die beiden Achsen können koinzidierend angeordnet werden.

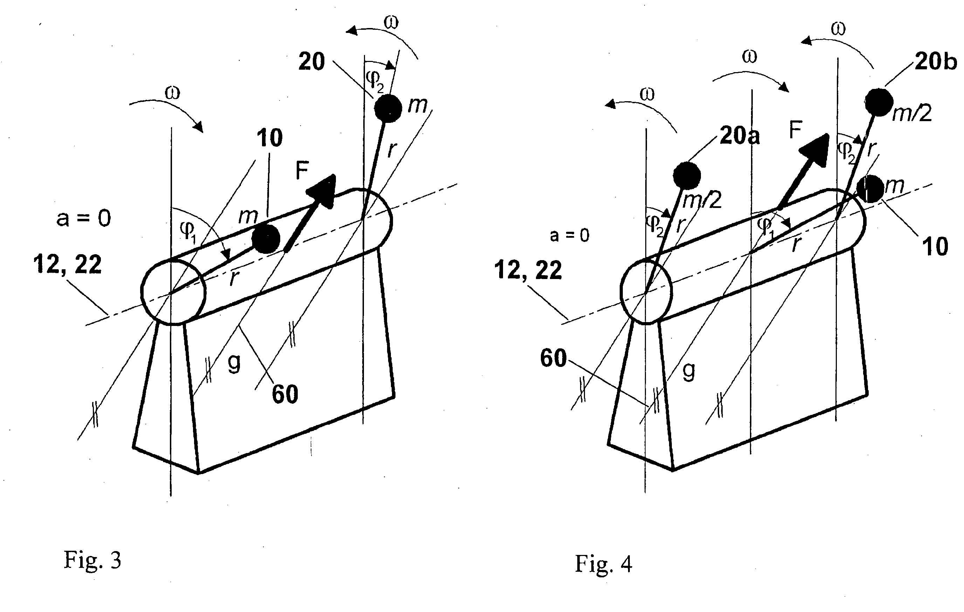

Die Wirkungsweise dieser Vorrichtung kann nun durch Wahl einer beliebigen Richtung der Geraden 60 (g) erweitert werden (Variante 1b, Fig. 3; es gelten wiederum die Beziehungen ϕ₁ = ωt; ϕ₂ = - ωt + θ). Mit ihr lassen sich harmonische Kräfte in dieser Richtung ohne gleichzeitiges Auftreten eines Moments um die Rotorachse erzeugen. Die Kraftrichtung ist durch Vorgabe des Phasenwinkels θ einstellbar. Zur Vermeidung unerwünschter Momente um eine Achse senkrecht zur Rotorachse können die Schwerpunkte der beiden Unwuchtmassen ohne Versatz in Richtung der Rotorachse 12, 22 angeordnet werden, indem eine der Unwuchtmassen 10, 20 durch zwei gleichgroße, stets gleichlaufende Teilmassen 20a, 20b dargestellt wird, die zu beiden Seiten (in Richtung der Rotorachse 12, 22) der anderen Unwuchtmasse 10, und mit gleichen Abständen zu dieser, angeordnet werden (Variante 1c, Fig. 4; es gelten wiederum die Beziehungen ϕ₁ = ωt; ϕ₂ = - ωt + θ). Die Drehwinkel der Unwuchtmassen 10, 20 und gegebenenfalls der Teilunwuchtmassen 20a, 20b können in vorteilhafter Weise durch eine mechanische Kopplung, etwa durch ein Getriebe, koordiniert werden. Dies gilt für alle hier beschriebenen Ausführungsbeispiele.

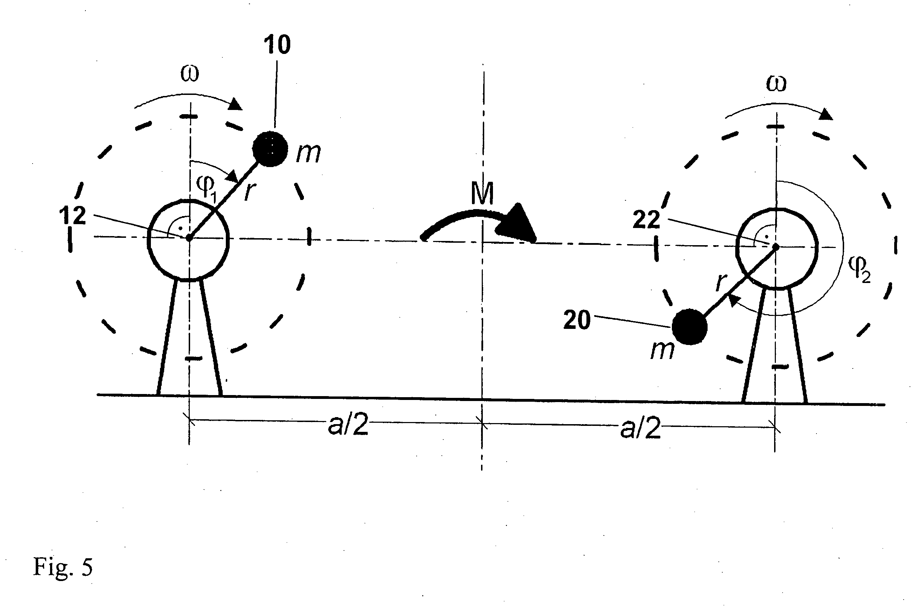

In einem weiteren Ausführungsbeispiel der Vorrichtung in einfacher Ausführung nach Fig. 5 (Variante 2a) rotieren gleich große Unwuchtmassen 10, 20 gleichsinnig und mit gleichem Radius r. Die Phasenverschiebung beträgt θ = 180°, d.h. die beiden Unwuchtmassen 10, 20 sind stets in Gegenlage. Die Bewegungen folgen den Ausdrücken ϕ₁ = ωt; ϕ₂ = ωt + 180°. Auf diese Weise läßt sich ein harmonisches Moment M in Richtung der Rotorachsen 12, 22 erzeugen. Die Amplitude des Moments läßt sich durch Verändern des Abstands a der beiden Rotorachsen 12, 22 oder, wie zuvor, durch gleichzeitiges und gleichartiges Verändern der Radien r der beiden Unwuchtmassen 10, 20 einstellen. Wird eine der Unwuchtmassen 10, 20 durch zwei gleichgroße, stets gleichlaufende Teilmassen 20a, 20b dargestellt (Variante 2b, entsprechend Fig. 4, aber mit veränderlichem Abstand a), so lassen sich auch kleine Werte a bis a = 0 einstellen, ohne unerwünschte Momente um eine Achse senkrecht zur Rotorachse in Kauf nehmen zu müssen. Das Moment M kann auf diese Weise bis auf den Amplitudenwert Null heruntergefahren werden, was im Verlauf der Regelung auch nur vorübergehend erforderlich werden kann. Die Drehwinkel der Unwuchtmassen können in vorteilhafter Weise durch Getriebe koordiniert werden.

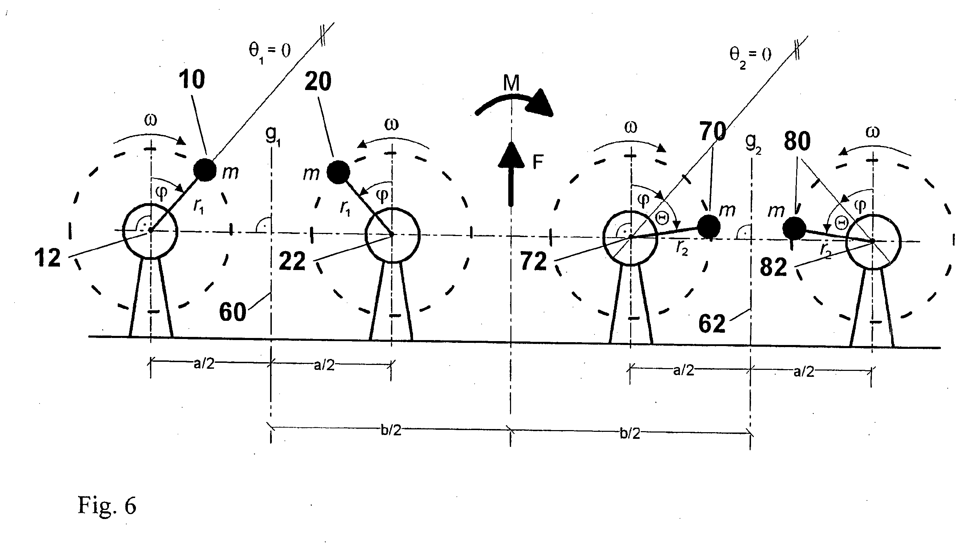

In einem weiteren Ausführungsbeispiel nach Fig. 6 (Variante 3) werden zwei gleichartige Vorrichtungen entsprechend Fig. 2 (Variante 1a) so angeordnet, daß beide Vorrichtungen in gleicher Weise räumlich orientiert und ausgerichtet sind. Die Unwuchtmassen 10, 20 bzw. 70, 80 beider Vorrichtungen rotieren mit betragsmäßig gleicher Geschwindigkeit und der Phasenwinkel innerhalb jeder der beiden Vorrichtungen ist so eingestellt, daß jede Vorrichtung jeweils nur eine harmonische Kraft und kein Moment erzeugt (θ ₁ = θ ₂ = 0). Die beiden Geraden 60, 62 (g₁, g₂) und damit die Kraftrichtungen sind parallel zueinander und liegen senkrecht zur Verbindungslinie jeweils zweier zugeordneter Rotorachsen 12, 22 bzw. 72, 82 (γ₁ = γ₂ = 0). Die beiden Vorrichtungen liegen in einem gewissen Abstand b senkrecht zu g₁, g₂. Auf diese Weise lassen sich gleichzeitig eine harmonische Kraft F in Richtung von g₁, g₂ und ein gleichfrequentes harmonisches Moment M in Richtung der Rotorachsen 12, 22, 72, 82 erzeugen. Die Amplituden von Kraft und Moment und der Phasenwinkel zwischen diesen beiden Kraftgrößen lassen sich einstellen durch Verändern der Radien der Unwuchtmassen (10, 20 bzw. 70, 80) - wobei die Radien r₁, r₂ der beiden Vorrichtungen unabhängig voneinander, die beiden Radien einer Vorrichtung in der Regel gleich einzustellen sind -, des Phasenwinkels Θ zwischen den Drehwinkeln der Unwuchtmassen 10, 20 und 70, 80 beider Vorrichtungen und des Abstandes b der beiden Vorrichtungen.

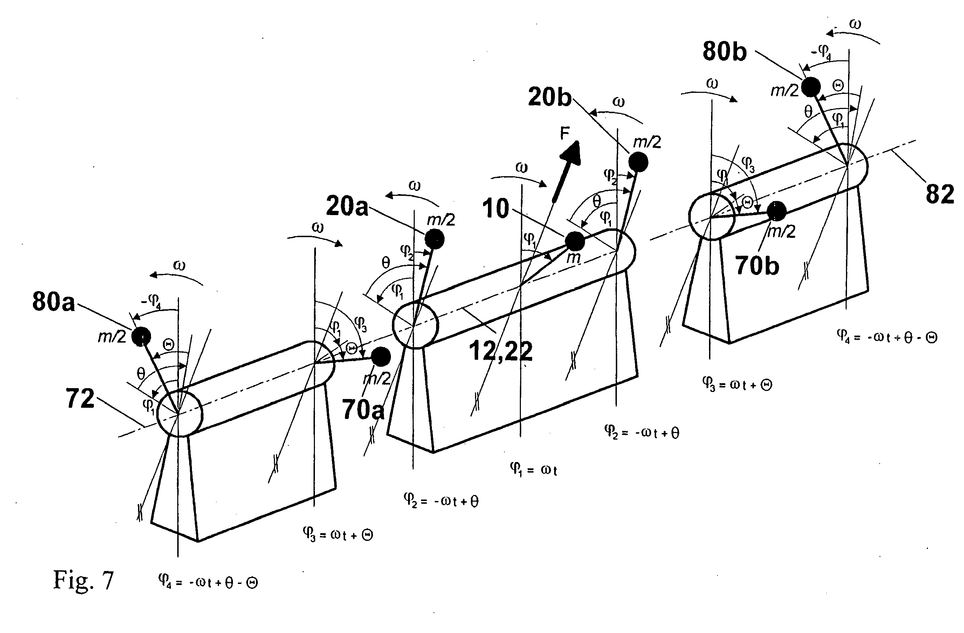

Ein weiteres Ausführungsbeispiel (Variante 4a, nicht in einer Figur dargestellt) entspricht der Doppelvorrichtung nach Variante 3 (Fig. 6), wobei der Abstand b zu null gewählt wird. Auf diese Weise läßt sich eine harmonische Kraft F ohne Auftreten eines Moments M erzeugen. Die Amplitude dieser Kraft läßt sich in besonders einfacher Weise durch Verändern des Phasenwinkels Θ zwischen den Drehwinkeln der Unwuchtmassen beider Vorrichtungen einstellen. Ein Verändern der Radien der Unwuchtmassen ist hierfür nicht mehr erforderlich. Die Kraft F wirkt senkrecht zur Verbindungslinie zweier zugeordneter Rotorachsen (sofern a ≠ 0). Werden die beiden Achsen jeweils einer Vorrichtung koinzidierend angeordnet (a = 0), so können alle vier Achsen auf einer Geraden angeordnet werden (nicht erfindungsgemäße variante 4b, nicht in einer Figur dargestellt). Dies ermöglicht einerseits eine kompakte Bauweise, andererseits das Erzeugen harmonischer Kräfte in beliebiger Richtung senkrecht zur Rotorachse. Die Kraftrichtung ist durch Vorgabe der Phasenwinkel θ₁ und θ₂ der beiden Vorrichtungen einstellbar, wobei für beide Vorrichtungen derselbe Phasenwinkel einzustellen ist (θ₁ = θ₂). Die Amplitude der Kraft F läßt sich wie zuvor durch Verändern des Phasenwinkels Θ einstellen. Zur Vermeidung von Momenten um eine Achse senkrecht zur Rotorachse 12, 22, 72, 82 können die Schwerpunkte aller Unwuchtmassen ohne Versatz in Richtung der Rotorachse angeordnet werden, indem drei der vier Unwuchtmassen durch jeweils zwei gleichgroße, stets gleichlaufende Teilmassen 20a, 20b, 70a, 70b, 80a, 80b dargestellt werden, die jeweils zu beiden Seiten (in Richtung der Rotorachse) der ungeteilten Unwuchtmasse 10, und mit jeweils gleichen Abständen zu dieser, angeordnet werden (nicht erfindungsgemäße variante 4c, dargestellt in Fig. 7).

In einem weiteren Beispiel (Variante 5, nicht in einer Figur dargestellt) werden zwei gleichartige Vorrichtungen entsprechend Variante 4a, 4b, oder 4c sinngemäß kombiniert und eingesetzt wie die auf Variante la zurückgreifende Variante 3. Auf diese Weise lassen sich wiederum eine harmonische Kraft senkrecht zu den Rotorachsen und ein gleichfrequentes harmonisches Moment M in Richtung der Rotorachsen erzeugen. An die Stelle des Veränderns der Radien der Unwuchtmassen, wie bei Variante 3 (Fig. 6) zur Einstellung der Amplituden und Phasenwinkel von Kraft und Moment erforderlich, tritt das Verändern der Phasenwinkel Θ₁, Θ₂ der beiden Vorrichtungen entsprechend Variante 4a, 4b, oder 4c.

In einem weiteren Beispiel (Variante 6, nicht in einer Fig. dargestellt) wird die beschriebene Vorrichtung in einfacher oder mehrfacher Ausführung oder in einer oder mehrerer der Varianten 1 bis 5 in beliebiger Weise kombiniert, wobei jeweils Kraftgrößen verschiedener Art und verschiedener Frequenz erzeugt werden. Durch Kombination einer Variante 1 (Variante 1a nach Fig. 2, so eingestellt, daß nur eine Kraft und kein Moment erzeugt wird, oder Variante 1b oder 1c) und einer Variante 2 lassen sich z.B. eine harmonische Kraft und eine harmonisches Moment in unabhängiger Weise voneinander, d.h. mit jeweils beliebig einstellbarer Amplitude, Frequenz und Phasenbeziehung erzeugen. Beide Vorrichtungen können in einen gemeinsamen Regelkreis eingebunden sein oder, unabhängig voneinander, in getrennten Regelkreisen angeordnet sein. Die letztgenannte Möglichkeit eines autonomen Betriebs führt zu einer Vereinfachung der Regelungsaufgabe. Der Regelkreis zur Erzeugung von Kräften könnte sich z.B. auf die Messung von Verschiebungen beschränken, der Regelkreis zur Erzeugung von Momenten auf die Messung von Verdrehungen. Derartige Ausgestaltungen sind vorteilhaft, wenn gleichzeitig mehrere zu dämpfende Schwingungsmodi mit verschiedenen Frequenzen auftreten, wobei für jeden Schwingungsmodus auch mehrere Vorrichtungen in verschiedenen Ausgestaltungen kombiniert werden können.

In einem weiteren Beispiel (Variante 7, nicht in einer Fig. dargestellt) wird die beschriebene Vorrichtung in einfacher oder mehrfacher Ausführung oder in einer oder mehrerer der Varianten 1 bis 6 in einem Behältnis untergebracht, das fest aber lösbar mit der Konstruktion verbunden ist. Vorteilhaft sind hierbei die Möglichkeiten des Umsetzens des Behältnisses, und damit der Anpassung an veränderliche Bau-, Betriebs- oder Beanspruchungszustände, und der Wiederverwendung bei anderen Konstruktionen. Für Anwendungen, bei denen relativ große Unwuchtmassen einzusetzen sind (bauliche Anlagen, Wasserfahrzeuge), kann als Behältnis ein 20'- oder 40'-Standardcontainer vorgesehen werden. Als weitere Vorteile ergeben sich dadurch einfache und wirtschaftliche Montage und Logistik (Transport, Lagerung). Es können mehrere Behältnisse zum Einsatz kommen; der Betrieb der in verschiedenen Behältnissen enthaltenen Vorrichtungen kann koordiniert oder autonom erfolgen.

Die beschriebene Vorrichtung in einfacher oder mehrfacher Ausführung oder in einer oder mehrerer der Varianten 1 bis 7 kann zur Schwingungskontrolle bei Baukonstruktionen, Land-, Wasser-, Luft- und Raumfahrzeuge oder sonstigen Maschinen, Geräten und Anlagen angewandt werden. Eine mögliche Anwendung im Bauwesen ist die Unterdrückung oder Begrenzung von Schwingungen infolge Erdbeben, Wind oder Verkehr und dadurch die Sicherstellung der Standsicherheit, der Dauerhaftigkeit und der Gebrauchsfähigkeit. Beispielhaft sei genannt die Gefährdung der Standsicherheit weitgespannter Brücken durch bewegungsinduzierte Luftkräfte und dadurch bedingtes Biege-Torsions-Flattem, das im Bau- oder Endzustand auftreten kann. Eine im Freivorbau errichtete Brücke kann bei großer Auskragung, wie sie insbesondere bei Schrägseilbrücken im Bauzustand auftritt, auch infolge der Böigkeit des Windes zu Schwingungen angeregt werden, die als Vertikal-, Transversal- oder Torsionsschwingungen auftreten und die Standsicherheit oder den Bauablauf beeinträchtigen. Ein weiteres Anwendungsbeispiel im Bauwesen ist die Begrenzung von Horizontal- oder Torsionsschwingungen bei Hochhäusern und Türmen, die durch Erdbeben oder Wind entstehen können.

Die bei den genannten Beispielen auftretenden Translationsschwingungen können in vorteilhafter Weise durch Vorrichtungen gemäß Variante 1, 3 oder 4 unterdrückt werden, wobei die Vorrichtungen und ihre Teile so ausgerichtet und die Phasenwinkel so eingestellt werden, daß die erzeugten Kräfte parallel zu den Translationsrichtungen liegen und den Translationsschwingungen entgegenwirken. Torsionsschwingungen können in vorteilhafter Weise durch eine Vorrichtung gemäß Variante 2, 3 oder 5 unterdrückt werden, wobei die Vorrichtung und ihre Teile so ausgerichtet werden, daß das erzeugte Moment der Torsionsschwingung entgegenwirkt - die Rotorachsen bei einer Brücke also in Brückenlängsrichtung, bei einem Hochhaus oder Turm vertikal orientiert sind - und wo erforderlich die Phasenwinkel so eingestellt werden, daß keine gleichzeitig wirkende Kraft auftritt. Bei kombinierten Translations- und Torsionsschwingungen sind Vorrichtungen gemäß Varianten 1, 3, 5 oder 6 alleine oder in Kombination mit Varianten 2 oder 4 wirksam. Amplitude, Frequenz und Phase der erzeugten Kräfte und Momente werden im Rahmen des Regelkreises oder der Regelkreise auf Grundlage der gemessenen Bewegung der Konstruktion und eventuell der gemessenen Umgebungsbedingungen (bei Erdbeben z.B. die Bodenbeschleunigung am Standort und in der Umgebung des Standorts) berechnet und eingestellt. Im einfachsten Fall (harmonische Schwingung als reine Translations- oder Torsionsbewegung) liegen die erzeugten Kräfte in Gegenphase zur Geschwindigkeit der zu unterdrückenden Schwingung. Für den Bauzustand einer Baukonstruktion kann die beschriebene Anwendung vorteilhaft in Verbindung mit Variante 7 erfolgen.

## Patentansprüche

1. Vorrichtung zur Schwingungskontrolle einer Konstruktion (30) mit
- zwei Massenkörpern (10, 20), die drehbar um jeweils eine Rotationsachse (12, 22) gelagert sind, wobei sich beide Rotationsachsen in der gleichen Richtung erstrecken und der Schwerpunkt jedes Massenkörpers einen Radius (r₁, r₂) von der zugeordneten Rotationsachse (12, 22) aufweist, und wobei ein Abstand zwischen der Rotationsachse eines Massenkörpers und der Rotationsachse des anderen Massenkörpers von null als Stellgrösse einstellbar ist ;
- einem Antrieb, der jeden Massenkörper (10, 20) in eine umlaufende Rotationsbewegung versetzt,
- mindestens einem Sensor (40), der eine Bewegung oder Beschleunigung der Konstruktion (30) erfasst, und
- einer Steuerung (50), die auf Grundlage der erfassten Bewegung oder Beschleunigung mindestens eine der folgenden Stellgrössen der beiden Massenkörpern zum Erzeugen von resultierenden Kraftgrössen, um die Schwingung einer mit der Vorrichtung verbundenen Konstruktion zu kontrollieren, steuert, :
- den Drehwinkel (ϕ₁,ϕ₂) der Rotationsbewegung mindestens eines Massenkörpers (10, 20),
- den Abstand (a) der Rotationsachse (12) eines Massenkörpers (10) von der Rotationsachse (22) des anderen Massenkörpers (20).

2. Vorrichtung nach Anspruch 1, **dadurch gekennzeichnet, dass** die Rotationsgeschwindigkeiten (ω₁, ω₂) der beiden Massenkörper (10, 20) dem Betrag nach gleich gross sind.

3. Vorrichtung nach einem der Ansprüche 1 oder 2, **dadurch gekennzeichnet, dass** die beiden Massenkörper (10, 20) die gleiche Masse haben.

4. Vorrichtung nach einem der Ansprüche 1 bis 3, **dadurch gekennzeichnet, dass** der Radius (r1, r2) eines Massenkörpers von der dem Massenkörper (10, 20) zugeordneten Rotationsachse (12, 22) für beide Massenkörper (10, 20) gleich gross ist.

5. Vorrichtung nach einem der Ansprüche 1 bis 4, **dadurch gekennzeichnet, dass** mindestens einer der beiden Massenkörper (10, 20) aus Teilmassenkörpern (20a, 20b) besteht, die in Richtung der Rotationsachsen (12, 22) voneinander beabstandet sind.

6. Vorrichtung nach einem der Ansprüche 1 bis 5, **dadurch gekennzeichnet, dass** die Phasenbeziehungen zwischen den Rotationsbewegungen der Massenkörper (10, 20 bzw. 10, 20a, 20b) durch eine mechanische Kopplung einstellbar sind.

7. Vorrichtung nach einem der Ansprüche 1 bis 6, **dadurch gekennzeichnet, dass** die Rotationsbewegungen beider Massenkörper (10, 20) gegensinnig sind.

8. Vorrichtung nach einem der Ansprüche 1 bis 7, **dadurch gekennzeichnet, dass** sie mit einer zweiten Vorrichtung nach einem der Ansprüche 1 bis 7, kombiniert ist, wobei sich die Rotationsachsen (12, 22, 72, 82) der ersten und der zweiten Vorrichtung in die gleiche Richtung erstrecken.

9. Vorrichtung nach Anspruch 8, **dadurch gekennzeichnet, dass** die Rotationsachsen (12, 22, 72, 82) der Massenkörper (10, 20, 70, 80) beider Vorrichtungen zusammenfallen.

10. Vorrichtung nach Anspruch 8 oder 9, **dadurch gekennzeichnet, dass** sie mit einer zweiten Vorrichtung nach Anspruch 8 oder 9 kombiniert ist, wobei sich die Rotationsachsen (12, 22, 72, 82) der ersten und der zweiten Vorrichtung in die gleiche Richtung erstrecken.

11. Vorrichtung nach einem der Ansprüche 8 bis 10, **dadurch gekennzeichnet, dass** die Phasenbeziehungen zwischen den Rotationsbewegungen der Massenkörper (10, 20, 70, 80 bzw. 10, 20a, 20b, 70a, 70b, 80a, 80b) durch eine mechanische Kopplung einstellbar sind.

12. Vorrichtung nach einem der Ansprüche 1 bis 11, **dadurch gekennzeichnet, dass** die Steuerung (50), die aufgrund der Messwerte des mindestens einen Sensors Befehle zur Steuerung der Vorrichtung erzeugt, als Regelung ausgelegt ist.

13. Vorrichtung nach einem der Ansprüche 1 bis 12, **dadurch gekennzeichnet, dass** mehrere Vorrichtungen über die Konstruktion (30) verteilt angeordnet sind.

14. Vorrichtung nach einem der Ansprüche 1 bis 13,**dadurch gekennzeichnet, dass** die Steuerung (50) auf Grundlage der erfassten Bewegung oder Beschleunigung den Radius von mindestens einem Massenkörper von seiner zugeordneten Rotationsachse steuert.

## Claims

1. Device for vibration control of a structure (30) with
- two mass bodies (10, 20), each of which is rotatably mounted around a rotational axis (12, 22), wherein both rotational axes extend in the same direction and the center of gravity of each mass body has a radius (r₁, r₂) from the associated rotational axis (12, 22), and wherein a spacing between the rotational axis of one mass body and the rotational axis of the other mass body is adjustable from zero as a control variable,
- a drive that sets each mass body (10, 20) in a circulating rotational motion,
- at least one sensor (40), which measures a movement or acceleration of the structure (30), and
- a control (50) that, based on the measured movement or acceleration of the structure, controls at least one of the following control variables of the two mass bodies to generate resulting forces in order to control the vibration of the structure connected to the device:
- the rotational angle (ϕ₁, ϕ₂) of the rotational movement of at least one mass body (10, 20),
- the spacing between the rotational axis (12) of one mass body (10) and the rotational axis (22) of the other mass body (20).

2. Device according to Claim 1, **characterized in that** the rotational speeds (ω₁, ω₂) of the two mass bodies (10, 20) are numerically identical.

3. Device according to Claims 1 or 2, **characterized in that** the two mass bodies (10, 20) are identical in mass.

4. Device according to one of the Claims 1 to 3, **characterized in that** the radius (r₁, r₂) of a mass body from the rotational axis (12, 22) associated with the mass body (10, 20) is identical for both mass bodies (10, 20).

5. Device according to one of the Claims 1 to 4, **characterized in that** at least one of the two mass bodies (10, 20) comprises partial mass bodies (20a, 20b), which are spaced apart from each other in the direction of the rotational axes (12, 22).

6. Device according to one of the Claims 1 to 5, **characterized in that** the phase relations between the rotational movements of the two mass bodies (10, 20 or 10, 20a, 20b) can be adjusted by a mechanical coupling.

7. Device according to one of the Claims 1 to 6, **characterized in that** the rotational movements of the two mass bodies (10, 20) go in opposite directions or run in the same direction.

8. Device according to one of the Claims 1 to 7, **characterized in that** it is combined with a second device according to one of the Claims 1 to 8, wherein the rotational axes (12, 22, 72, 82) of the first and second devices extend in the same direction.

9. Device according to Claim 8, **characterized in that** the rotational axes (12, 22, 72, 82) of the mass bodies (10, 20, 70, 80) of both devices are coincident.

10. Device according to Claims 8 or 9, **characterized in that** it is combined with a second device according to one of the Claims 8 or 9, wherein the rotational axes (12, 22, 72, 82) of the first and the second devices extend in the same direction.

11. Device according to one of the Claims 8 to 10, **characterized in that** the phase relations between the rotational movements of the mass bodies (10, 20, 70, 80 or 10, 20a, 20b, 70a, 70b, 80a, 80b) can be adjusted by means of a mechanical coupling.

12. Device according to one of the Claims 1 to 11, **characterized in that** the control (50), which generates commands for controlling the device based on the measured values of at least one sensor, is constructed as a feedback control.

13. Device according to one of the Claims 1 to 12, **characterized in that** multiple devices are distributed over the structure (30).

14. Device according to one of the Claims 1 to 13, **characterized in that** the control (50), based on the measured movement or acceleration, controls the radius of at least one mass body from its associated rotational axis.

## Revendications

1. Dispositif pour la régulation de vibration d'une structure (30) avec :
- deux masselottes (10, 20), chacune montée de façon pivotante autour d'un axe de rotation (12, 22), dans lequel les deux axes de rotation s'étendent dans la même direction et le centre de gravité de chaque masselotte présente un rayon (r₁, r₂) à partir de l'axe de rotation associé (12, 22), et dans lequel un espacement entre l'axe de rotation d'une masselotte et l'axe de rotation de l'autre masselotte est réglable à partir de zéro en tant que variable de réglage,
- un entraînement qui met chaque masselotte (10, 20) dans un mouvement circulaire de rotation,
- au moins un capteur (40), qui mesure un mouvement ou une accélération de la structure (30), et
- une commande (50) qui, en fonction du mouvement mesuré ou de l'accélération mesurée de la structure, commande au moins une des variables de réglage suivantes des deux masselottes pour générer des forces résultantes afin de contrôler la vibration d'une structure reliée au dispositif :
- l'angle de pivotement (ϕ₁, ϕ₂) du mouvement de rotation d'au moins une masselotte (10, 20),
- l'espacement entre l'axe de rotation (12) d'une masselotte (10) et l'axe de rotation (22) de l'autre masselotte (20).

2. Dispositif selon la revendication 1, **caractérisé en ce que** les vitesses de rotation (ω₁, ω₂) des deux masselottes (10, 20) sont numériquement identiques.

3. Dispositif selon les revendications 1 ou 2, **caractérisé en ce que** les deux masselottes (10, 20) sont identiques en masse.

4. Dispositif selon l'une des revendications 1 à 3, **caractérisé en ce que** le rayon (r₁, r₂) d'une masselotte à partir de l'axe de rotation (12, 22) associé à la masselotte (10, 20) est identique pour les deux masselottes (10, 20).

5. Dispositif selon l'une des revendications 1 à 4, **caractérisé en ce qu'**au moins une des deux masselottes (10, 20) comprend des masselottes partielles (20a, 20b), qui sont espacées l'une de l'autre dans la direction des axes de rotation (12, 22).

6. Dispositif selon l'une des revendications 1 à 5, **caractérisé en ce que** les relations de phase entre les mouvements de rotation des deux masselottes (10, 20 ou 10, 20a, 20b) sont réglables par couplage mécanique.

7. Dispositif selon l'une des revendications 1 à 6, **caractérisé en ce que** les mouvements de rotation des deux masselottes (10, 20) sont de sens opposés.

8. Dispositif selon l'une des revendications 1 à 7, **caractérisé en ce qu'**il est associé à un second dispositif selon l'une des revendications 1 à 7, dans lequel les axes de rotation (12, 22, 72, 82) des premier et second dispositifs s'étendent dans la même direction.

9. Dispositif selon la revendication 8, **caractérisé en ce que** les axes de rotation (12, 22, 72, 82) des masselottes (10, 20, 70, 80) des deux dispositifs coïncident.

10. Dispositif selon les revendications 8 ou 9, **caractérisé en ce qu'**il est associé à un second dispositif selon l'une des revendications 8 ou 9, dans lequel les axes de rotation (12, 22, 72, 82) des premier et second dispositifs s'étendent dans la même direction.

11. Dispositif selon l'une des revendications 8 à 10, **caractérisé en ce que** les relations de phase entre les mouvements de rotation des masselottes (10, 20, 70, 80 ou 10, 20a, 20b, 70a, 70b, 80a, 80b) sont réglables par couplage mécanique.

12. Dispositif selon l'une des revendications 1 à 11, **caractérisé en ce que** la commande (50), qui génère des instructions pour commander le dispositif en fonction des valeurs mesurées d'au moins un capteur, est construite sous forme de commande à rétroaction.

13. Dispositif selon l'une des revendications 1 à 12, **caractérisé en ce que** plusieurs dispositifs sont distribués sur la structure (30).

14. Dispositif selon l'une des revendications 1 à 13, **caractérisé en ce que** la commande (50), en fonction du mouvement mesuré ou de l'accélération mesurée, commande le rayon d'au moins une masselotte à partir de son axe de rotation associé.
